## Europäisches Patentamt
## European Patent Office
## Office européen des brevets

(11) Publication number : **0 120 817**
**B1**

(12) # EUROPEAN PATENT SPECIFICATION

(45) Date of publication of patent specification :
30.12.86

(21) Application number : 84830069.5

(22) Date of filing : 13.03.84

(51) Int. Cl.⁴ : **B 60 N   1/04**

(54) **Front seat assembly for motor vehicles.**

(30) Priority : 24.03.83 IT 5311883 U
05.12.83 IT 5401083 U

(43) Date of publication of application :
03.10.84 Bulletin 84/40

(45) Publication of the grant of the patent :
30.12.86 Bulletin 86/52

(84) Designated contracting states :
DE FR GB IT SE

(56) References cited :
DE-A- 2 032 147
FR-A- 2 285 261
FR-A- 2 373 255
FR-A- 2 457 786
FR-A- 2 459 740
GB-A- 2 099 691
US-A- 2 005 112
US-A- 2 321 716

(73) Proprietor : FIAT AUTO S.p.A.
Corso Giovanni Agnelli 200
I-10135 Torino (IT)

(72) Inventor : Vitale, Carlo
Via Pietro Nenni 3
I-10042 Nichelino (Torino) (IT)
Inventor : Acuto, Giovanni
Via di Nanni 16/5
I-10043 Orbassano (Torino) (IT)
Inventor : Sburlati, Luigi
Corso Giambone 53
I-10143 Torino (IT)
Inventor : Tirapelle, Luigi
Via della Costituzione 52
I-10036 Settimo Torinese (Torino) (IT)

(74) Representative : Bosotti, Luciano et al
c/o Jacobacci-Casetta & Perani S.p.A. Via Alfieri, 17
I-10121 Torino (IT)

## Description

The present invention relates to motor vehicle seats and in particular to a seat assembly intended to be mounted on a pair of straight parallel guides fixed to the floor of the passenger compartment of the motor vehicle. More specifically, the present invention relates to a motor vehicle seat as set forth in the pre-characterising portion of Claims 1 and 3. Such a seat is known from FR-A-2 285 261.

The object of the invention is to provide an easily adjustable and tippable seat, that is to say a seat which, starting from a normal position of use in which the seat is securely blocked, without any risks for the passengers in the event of sharp decelerations of the motor vehicle, can easily be adjusted in accordance with the anthropometric characteristics and habits of the occupant, and which can be brought into an advanced lowered position in which the movement of objects and persons into the region of the vehicle passenger compartment behind the seat itself is facilitated. One is thus considering a seat intended to be used for preference as the front seat of a motor car with two or three doors. A particular object of the invention is to provide a tippable seat whose normal position of use can be adjusted without significantly altering the setting of the seat.

According to the present invention this object is achieved by virtue of a seat assembly of which two different embodiments are called for in Claims 1 and 3, respectively.

Some advantageous developments of the embodiment of Claim 1 are called for in Claims 2 and 4, whereas some other advantageous developments of the embodiment of Claim 3 are called for in Claims 4 to 8.

The invention will now be described purely by way of non-limiting example with reference to the appended drawings, in which :

Figure 1 is a vertical median sectional view of a first embodiment of a seat assembly for motor vehicles according to the invention, illustrated in a first position of use,

Figure 2 is a vertical median sectional view illustrating another position of use of the seat assembly of Figure 1,

Figure 3 is a section taken on the line III-III of Figure 1,

Figure 4 is a section taken on the line IV-IV of Figure 1,

Figure 5 is a partially sectioned vertical median view of a second embodiment of a seat assembly for motor vehicles according to the invention, illustrated in a position of use similar to that of Figure 1,

Figure 6 is a section on the line VI-VI of Figure 5, and

Figure 7 illustrates the seat assembly of Figure 5 in a position of use similar to that illustrated in Figure 2.

In the drawings there is shown generally indicated 1 the front seat of a two-or three-door motor car (not illustrated).

The seat 1 can be seen to comprise a backrest 2 and a portion 3 defining the seating plane, which in the present description and in the following claims will be termed the « cushion ».

Two channel-shaped straight guides 4 are fixed parallel to each other to the floor F of the passenger compartment of the motor car in correspondence with the sides of the seat.

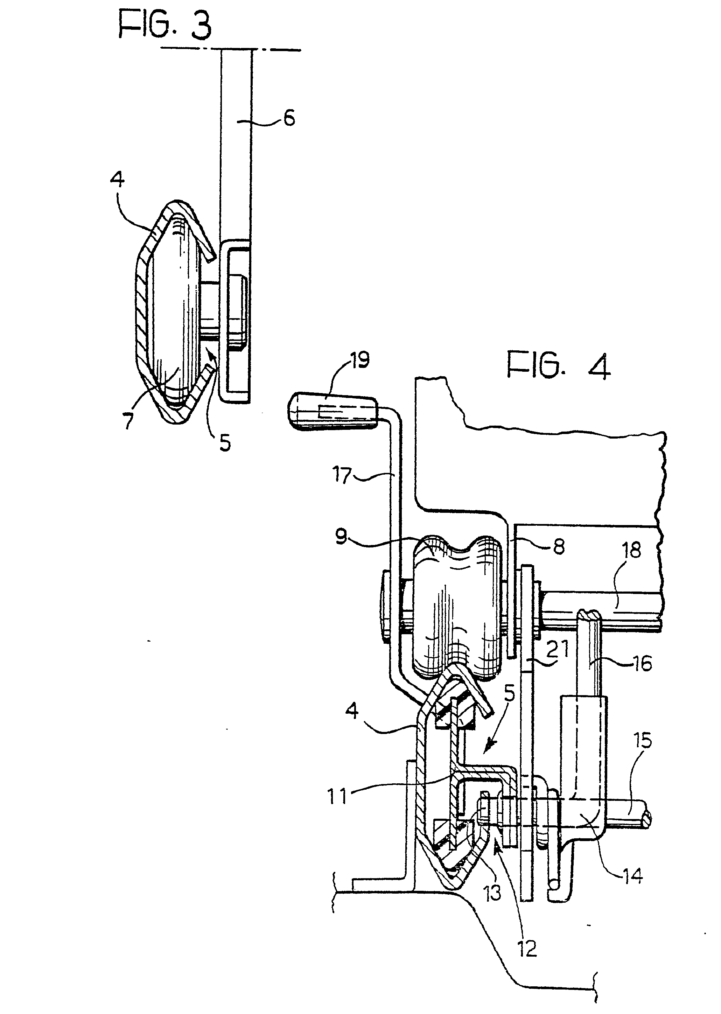

As is best seen in Figures 3 and 4, the guides 4 face each other so that their longitudinal channels indicated 5 open into the space beneath the cushion 3 of the seat 1.

Two feet or support legs 6 extend downwardly from the sides of the cushion 3 in positions intermediate the front edge and the rear edge of the cushion 3 itself. Each leg 6 carries a wheel or roller 7 at its free end, which, as seen in Figure 3, is slidable in the underlying guide 4.

In correspondence with the ends of the rear edge of the cushion 3, the seat 1 has two further support legs 8 each of which carries a grooved roller or wheel 9 intended to rest and roll on the upper side of the corresponding guide 4.

The arrangement described is such that the seat 1 may effect a longitudinal translational movement on the guides 4. The shape of the legs 6 and 8 also allows the seat to effect a forward rotational movement about the common axis of rotation of the wheels 7 carried by the front legs 6 of the seat 1. As a result of this rotational movement, which takes place about an axis oriented perpendicular to the guides 4, the rollers 9 are raised from the guides 4 and disengaged from them.

Two slides are indicated 11, each of which has a T-profile, the head of this profile being inserted in a respective one of the guides 4.

The slides 11 are thus able to slide longitudinally within the guides 4.

In its rear half, each of the guides 4 has a series of notches defining a toothed rack 12 on the lower edge of the channel 5.

In a manner widely known *per se*, each of the notches is intended to be engaged by a pin 13 carried by a pivotable element (crank) 14 pivoted on a further pin 15 fixed to the body of the corresponding slide 11. The crank 14 can be oriented by means of a control lever 16 (partially shown in Figure 4) which simultaneously controls the orientation of a similar crank 14 mounted on the slide 11 slidable in the guide 4 located on the other side of the seat 1.

The lever 16 is generally U-shaped and is disposed beneath the cushion 3 so that a passenger occupying the seat 1 may operate it easily by grasping its handle part which is located immediately beneath the front edge of the cushion 3.

The handle part of the lever 16, upon being raised, disengages the pins 13 from the notches of the toothed rack 12 of both guides 4, whereupon the slides 11 are movable longitudinally within the guides 4. Subsequent lowering of the handle part of the lever 16 causes the pins 13 to engage in one of the notches of the rack 12 and consequently lock the slides 11 relative to the guides 4.

Two hook members 17 (one for each side of the seat) are intended to ensure firm connection between the rear edge of the cushion 3 and the slides 11 in the normal condition of use of the seat. The adaptation of the normal position of use of the seat 1 to the anthropometric characteristics and the driving or travelling habits of the passengers may thus be achieved by operation of the lever 16 (as described above and in a manner known per se) so as to vary the position in which the slides 11 are locked within the guides 4 as a result of the engagement of the pins 13 in the notches of the toothed rack 12.

The adjustment of the position of the seat 1 so far described involves only linear translational movement of the wheels 7 and the rollers 9 along the guides 4. The setting of the seat 1 thus remains the same whatever the position chosen by the passenger.

The hook members 17 are connected together by a shaft 18 which extends beneath the rear edge of the cushion 3. A handgrip or handle 19 allows the hook members 17 to be rotated against the return force exerted by at least one return spring 20 so as to disengage the rear edge of the cushion 3 from the slides 11.

Two pivotal arms, one for each side of the seat 1, are indicated 21 and each arm is hinged at one end to the rear edge of the cushion 3 (for example, in correspondence with the shaft 18). At its opposite end each of the arms 21 is connected to a pin (possibly corresponding to the pin 15) carried by the respective slide 11 in a region which, in the normal position of use of the seat 1, is between the common axis of rotation of the wheels 7 and the rear edge of the cushion 3.

The configuration described is such that, upon disengagement of the hook members 17 from the slides 11, the rear edge of the cushion 3 is no longer firmly connected to the slides 11. A thrust exerted on the rear part of the backrest 2 thus causes, together the forward sliding of the seat, a simultaneous forward rotation of the seat itself about the common axis of rotation of the wheels 7, the position of which is continuously variable as a result of the translational movement of the seat. The movement of the seat is controlled by the connecting arms 21 which rotate about their axis of hingeing to the slides 11 and guide the rear edge of the cushion 3 in a circular path about this hinge axis.

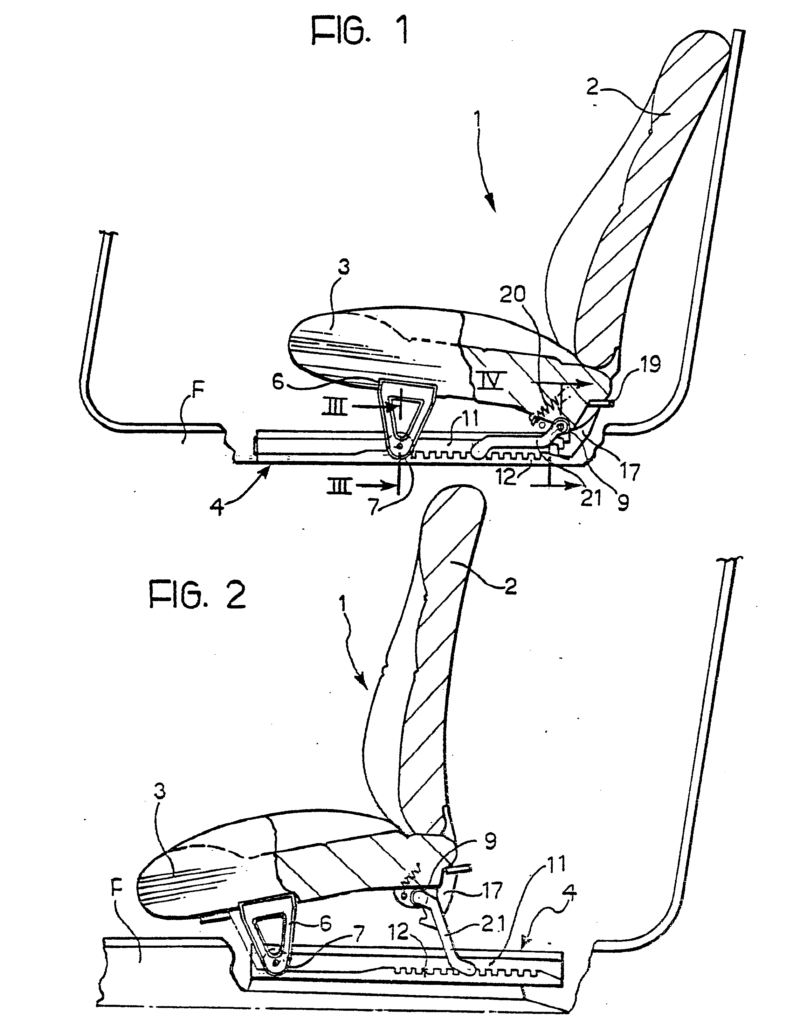

As a result of this combined translational and rotational movement, the seat 1 is brought from the (adjustable) position of normal use illustrated in Figure 1 to the advanced lowered position illustrated in Figure 2. Passengers occupying the rear seats of the motor car can thus get into or out of the car more easily.

As a result of the superposition of the rotation on the translational movement, the upper end of the backrest 2, in its movement from the normal position of use (Figure 1) to the lowered position (Figure 2), describes a longer path than the path described simultaneously by the end connected to the rear edge of the cushion 3. The amplitude of this latter path corresponds essentially to the length of the translational movement of the seat 1 on the guides 4.

The arrangement described thus allows the upper end of the backrest 2 to affect a greater lowering movement for the given translational movement, making a larger space available for the entry and exit of the rear seat passengers.

The connection of the seat 1 to the slides 11 by means of the arms 21 also prevents the seat 1 being completely free for sliding on the guides 4 even in event of imperfect closure or accidental disengagement of the hook members 17 which has obvious dangers for the passengers (both those occupying the front seats and the those occupying the rear seats) in the event of sharp deceleration of the motor vehicle.

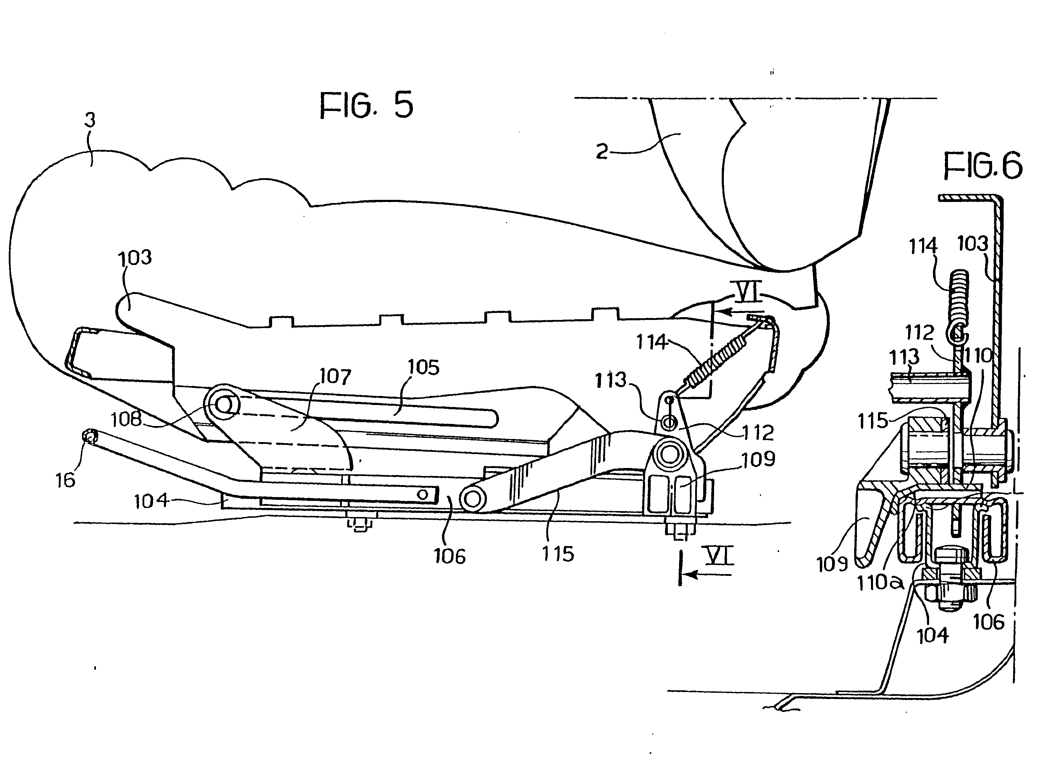

Figures 5 to 7 illustrate a further possible embodiment of a seat assembly according to the invention in which identical reference numerals are used to indicate the elements already illustrated in Figures 1 to 4.

More particularly, in the embodiment of Figures 5 to 7, the cushion 3 includes, in a generally known manner, a framework or structure constituted by profiled metal members between which extend connecting springs and also including foam padding fixed to the framework.

The framework of the cushion 3 includes two side members or sides 103 each of which has a lower portion projecting downwardly from each side 103, this lower portion having a slot 105 with a substantially straight course which extends into the front portion of the cushion 3.

Two profiled slides indicated 106 are slidable on a pair of straight guides 104 fixed to the floor F of the passenger compartment in an arrangement similar to that of the guides 4 of Figures 1 to 4.

The guides 104 have a generally channel profile open upwardly with two lateral flanges L projecting outwardly of the guide.

The slides 106 have a C profile with characteristics complementary to the profile of the guides 104.

Naturally it is possible to use guides 104 and slides 106 having complementary profiles different from those illustrated and in particular guides and slides having profiles similar to those of the guides 4 and the slides 11 described previously.

At the front end (that is to say the end facing the front edge of the cushion 3) of each slide 106 there is bolted (or alternatively projection welded) an approximately triangular bracket 107 which projects upwardly from the slide 106 and carries a horizontal-axis pin 108 at its upper end. The generally cylindrical pin 108 engages in the slot 105 in the corresponding side 103 of the cushion 3.

In the assembled position, the pins 108 and the brackets 107 are thus aligned with each other along a horizontal axis perpendicular to the vertical planes in which the guides 104 and the slides 106 lie.

The brackets 107 and the pins 108 define front support legs or feet for the seat 1 located in correspondence with the sides 103 intermediate the front edge and the rear edge of the cushion 3.

At its rear edge, the cushion 3 has two further legs 109 which, in the normal position of use of the seat illustrated in Figure 5, rest on the slides 106 (and hence on the guides 104) in correspondence with the rear ends of these slides 106.

As is best seen in Figure 6, the support legs 109 are preferably constituted by shaped parts of a material with a high mechanical strength fixed to the rear ends of the sides 103 of the cushion 3.

Each support leg 109 has an insert 110 of antifriction material having a bevelled edge 110a. As is seen in Figure 6, the bevelled edges 110a cooperate with the inner edge of the corresponding slide 106 so as to facilitate the correct lateral positioning of the seat 1 relative to the guides 104 on which it bears, the bevelled edges 110a of the rear legs 109 thus together defining a wedge configuration which can cooperate with the inner edges of the slides 106 to ensure the centering of the seat 1 relative to the guides 104.

By way of summary, the arrangement of parts described in such that the cushion 3, to which the backrest 2 is connected, is supported on the slides 106 by two front legs, constituted by the brackets 107, and by two rear legs constituted by the elements 109.

The slides 106 in their turn bear on the guides 104 relative to which the slides 106 can effect longitudinal sliding movement.

In a substantially similar manner to the arrangement described above with reference to the guides 4 and the slides 11, between each slide 106 and the corresponding guide 104 there are interposed disengageable locking means (for example, pins engaging the notches of a toothed rack) which allow the slides 106 to be locked relative to the guides 104 in a selectively predetermined longitudinal position. These locking means are operated by the control lever 16 (only partially visible in Figure 5) located beneath the cushion 3.

Again in this case, when the handle part of the lever 16 is lifted, the slides 106 are free to slide longitudinally on the guides 104. Lowering of the handle part of the lever 16 however causes the locking of the slides 106 relative to the guides 104.

Two hook members 112 substantially similar to the hook members 17 ensure a firm connection between the rear edge of the cushion 3 and the rear ends of the slides 106 in the normal condition of use of the seat (illustrated in Figure 5).

With the hooks 112 in the closed position, the cushion 3 (and consequently the seat 1) is firmly locked on the slides 106.

Under these conditions, the normal position of use of the seat may be adapted to the anthropometric characteristics and the driving or travelling habits of the passengers by operation of the lever 16 (as described above) so as to vary the position in which the slides 106 are locked on the guides 104 as a result of the engagement of the locking means interposed therebetween.

The adjustment of the position of the seat 1 effected in this manner involves solely a linear translation of the slides 106 on the guides 104 and a corresponding relative sliding of the pins 108 within the slots 105. The seat 1 thus maintains its setting independently of the position chosen by the passenger.

The hook members 112 are connected together by a shaft 113 which extends beneath the rear edge of the cushion 3 and are urged towards the position of engagement with the rear ends of the slides 106 by helical springs indicated 114.

A handgrip or handle (not illustrated) located on the side of the seat 1 facing outwardly of the motor car, allows the rotation of the hook members 112 to be effected against the return force exerted by the springs 114 so as to disengage the rear edge of the cushion 3 from the slides 106.

Two pivotal arms, one for each side of the seat 1, are indicated 115 and have a function which is similar to that of the arms 21 described above. Each arm 115 is hinged at one end to the rear edge of the cushion 3 (for example adjacent the shaft 113). At its opposite end the arm is hinged to the corresponding slide 106 in a region which, in the normal position of use of the seat, is interposed between the horizontal axis of the pins 108 of the brackets 107 and the rear edge of the cushion 3.

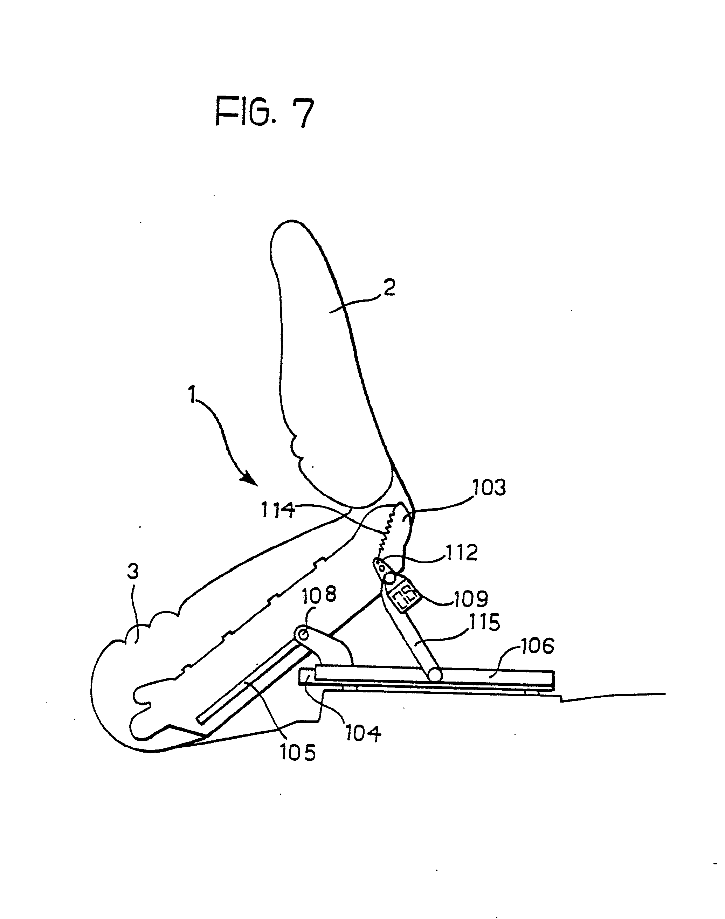

When the hooks 112 are disengaged from the slides 106, the rear edge of the cushion 3 is no longer firmly connected to the slides 106 themselves. Under these conditions, even when the slides 106 are locked on the guides 104 as a result of the engagement of the locking means acting between these parts, a thrust exerted on the rear part of the backrest 2 causes the tipping of the seat 1 from the normal (adjustable) position of use illustrated in Figure 5, to the advanced lowered position illustrated in Figure 7. In the lowered position of the seat the entry (and exit) of passengers occupying the rear seats of the motor car is facilitated.

Again in the case of the embodiment of Figures 4 to 7, the tipping of the seat 1 is achieved by a combined translational and rotational movement.

The translational movement is determined by the sliding of the pins 108 within the slots 105 provided in the sides 103 of the seat 1. The rotational movement is, however, achieved by a rotation of the sides 103 about the pins 108. The rotational movement is thus achieved instantaneously about the axis identified by the pins 108 themselves.

The translational-rotational movement of the seat is controlled by the connecting arms 115 which pivot about the hinge axis on the slide 106 and guide the rear edge of the cushion 3 in a circular path about this hinge axis.

As a result of the superposition of the rotational upon the translational movement, the upper end of the backrest 2, in its passage from the normal position of use (Figure 5) to the lowered position (Figure 7) describes a longer path than the path described simultaneously by the end of the backrest connected to the rear edge of the cushion 3. The amplitude of the latter path corresponds substantially to the length of the translational movement of the seat 1 relative to the guides 104, that is to say to the length of the slots 105.

Again in this case, the connection of the seat to the slides 106 achieved by means of the arms 115 prevents the seat from being completely free to slide relative to the guides 104 in the event of imperfect engagement or the accidental disengagement of the hook members 112 which have with obvious dangers for the passengers (both those occupying the front seats and those occupying the rear seats) in the event of sharp decelerations of the motor vehicle.

## Claims

1. Seat assembly for motor vehicles intended for mounting on a pair of straight guides (4) which are parallel to each other and fixed to the floor (F) of the passenger compartment of the motor vehicle, wherein :

with the cushion (3) of the seat (1) there are associated front support members (6, 7) which allow translational movement of the seat (1) along the guides (4) and forward rotation of the seat (1) itself about an axis perpendicular to the guides (4), and rear support members (8, 9) bearing on the guides (4) and raisable from the guides (4) by the effect of the said forward rotation of the seat (1), and

disengageable hook means (11, 17) are interposed between the seat (1) and the guides (4) to allow the locking of the seat (1) in a selectively adjustable normal position of use and, when disengaged, to allow the seat (1) to be brought to an advanced lowered position with a combined translational and forward rotational movement of the seat itself, characterised in that :

said guides (4) have a substantially channel-like section and are open towards each other,

the front support members (6, 7) and the rear support members (8, 9) include rotary elements (7, 9) cooperating respectively with the channel and with the outer surface of the guides (4),

two slides (11), one on each side of the seat (1), are provided slidably mounted on the guides (4) and able to be locked to the guides (4) themselves in a selectively predetermined position,

disengageable locking means (17) are provided acting between the slides (11) and the seat (1) in order to lock the seat (1) itself in a selectively adjustable normal position of use and acting on the slides (11), and

at least one pivotal connecting arm (21) is provided having one end hinged to the rear edge of the cushion (3) and its opposite end hinged to one of the slides (11) in a region which, in the said normal position of use, is interposed between the front support members (6, 7) and the said rear support members (8, 9) for the seat (1), whereby, upon disengagement of the locking means (17) the seat (1) may be slid on the guides (4) towards the said advanced position, while the said connecting arm (21) guides the rear edge of the cushion (3) in a circular path, imparting a controlled forward rotational movement to the seat (1).

2. Seat assembly according to Claim 1, characterised in that at least some of the rotary elements are in the form of rollers or wheels (7, 9).

3. Seat assembly for motor vehicles intended for mounting on a pair of straight guides (104) which are parallel to each other and fixed to the floor (F) of the passenger compartment of the motor vehicle, wherein :

with the cushion (3) of the seat (1) there are associated front support members (107, 108) which allow translational movement of the seat (1) along the guides (104) and forward rotation of the seat (1) itself about an axis perpendicular to the guides (104), and rear support members (109) bearing on the guides (104) and raisable from the guides (104) by the effect of the said forward rotation of the seat (1), and

disengageable hook means (106, 112) are interposed between the seat (1) and the guides (104) to allow the locking of the seat (1) in a selectively adjustable normal position of use and, when disengaged, to allow the seat (1) to be brought to an advanced lowered position with a combined translational and forward rotational movement of the seat itself, characterised in that it includes :

two slides (106) one for each side of the seat (1) slidably mounted on the guides (104) and able to be locked to the guides (104) themselves in a selectively predetermined position, each of the slides (106) having, in correspondence with the front edge of the cushion, a bracket (107) with a pin part (108) defining, together with the pin part (108) of the bracket (107) of the other slide (106), the said rotational axis of the seat,

disengageable locking means (112) acting between the slides (106) and the cushion (3) in order to lock the seat in a selectively adjustable normal position of use by modification of the locking position of the slides (106) on the said guide (104), and

a pair of shaped elements (103) each of which is located along a respective side of the cushion (3) of the seat (1) and has an elongate profiled part (105) which can cooperate with the pin part (108) of the bracket (107) of one of the slides (106), and

at least one pivotal connecting arm (115) having one end hinged to the rear edge of the cushion (3) and its opposite end hinged to one of the slides (106) in a region which, in the said normal position of use, is interposed between the front support members (107, 108) and the said rear support members (109) for the seat (1) whereby, upon disengagement of the locking means (112) there can be obtained :

the guided sliding of the shaped element (103) relative to the pin part (108) along a path defined by the profiled part (105),

the rotation of the shaped element (103) about the common axis of rotation defined by the said pin parts (108), and

the guiding of the rear edge of the cushion (3) in a circular path defined by said at least one pivotal connecting arm (115), whereby a controlled forward rotational movement is imparted to the seat (1).

4. Seat assembly according to Claim 1 or Claim 3, characterised in that it includes a pair of pivotal arms (21, 115) each of which connects one side of the cushion (3) to one of the slides (11, 106).

5. Seat assembly according to Claim 3, characterised in that the shaped elements (103) are integral parts of the structure of the cushion (3) of the seat.

6. Seat assembly according to Claim 3 or Claim 5, characterised in that each of the shaped elements (103) has a substantially straight slot (105) defining the said profiled part.

7. Seat assembly according to any of Claims 3, 5 or 6, characterised in that support legs (109) are associated with the shaped elements (103) in correspondence with the rear edge of the cushion (3) the legs being able to cooperate with the corresponding ends of the said slides (106).

8. Seat assembly according to Claim 7, characterised in that the support legs (109) have bevelled edges (110a) for cooperating with the edges of the slides (106) in a generally wedge configuration in order to ensure the centering of the seat relative to the guides (104) in the normal position of use.

**Patentansprüche**

1. Sitzeinheit für Kraftfahrzeuge, die auf zwei zueinander parallelen geradlinigen, an dem Boden (F) des Fahrgastraums des Kraftfahrzeugs befestigten Führungen (4) montierbar sind, mit dem Sitzkissenteil (3) zugeordneten vorderen Lagerungsgliedern (6, 7), die eine Translationsbewegung des Sitzes (1) längs der Führungen (4) sowie eine Vorwärtsdrehung des Sitzes (1) selbst um eine senkrecht zu den Führungen (4) verlaufende Achse ermöglichen, und hinteren Lagerungsgliedern (8, 9), die an den Führungen (4) gelagert und von diesen durch die Vorwärtsdrehung des Sitzes (1) abhebbar sind, sowie mit zwischen dem Sitz (1) und den Führungen (4) angeordneten lösbaren Verhakungsmitteln (11, 17) zur Verriegelung des Sitzes (1) in einer selektiv einstellbaren normalen Gebrauchsstellung, die es in gelösten Zustand ermöglichen, den Sitz (1) durch eine kombinierte Trabslations- und Vorwärtsdrehbewegung in eine abgesenkte Vorderposition zu verbringen, dadurch gekennzeichnet,

daß die Führungen (4) ein im wesentlichen kanalförmiges Profil besitzen und an ihren aneinander zugewandten Seiten offen sind,

daß die vorderen Lagerungsglieder (6, 7) und die hinteren Lagerungsglieder (8, 9) Drehelemente (7, 9) umfassen, die mit dem Profilkanal bzw. mit der Außenfläche der Führungen (4) zusammenwirken,

daß auf jeder Seite des Sitzes (1) je ein Gleitstück (11) vorgesehen ist, das gleitbar an den Führungen (4) montiert und in den Führungen (4) selbst in einer wählbaren vorbestimmten Position blockierbar ist,

daß lösbare Verriegelungsmittel (17) vorgesehen sind, die zwischen den Gleitstücken (11) und dem Sitz (1) wirksam sind, um den Sitz (1) selbst in einer vorbestimmten einstellbaren normalen Gebrauchsstellung zu blockieren und auf die Gleitstücke (11) einzuwirken,

und daß wenigstens ein Verbindungsschwenkarm (21) vorgesehen ist, der mit einem Ende an der hinteren Kante Sitzkissenteils (3) und mit seinem entgegengesetzten Ende an einem der Gleitstücke (11) in einer Position angelenkt ist, die in der genannten normalen Gebrauchsstellung zwischen dem vorderen Lagerungsgliedern (6, 7) und den hinteren Lagerungsgliedern (8, 9) des Sitzes (1) liegt, derart daß der Sitz durch Lösen der Verriegelungsmittel (17) auf den Führungen (4) in die genannte Vorderposition gleiten kann, während der Verbindungsschwenkarm (21) die hintere Kante des Sitzkissenteil (3) in einer Kreisbahn führt, wobei der Sitz (1) mit einer kontrollierten Vorwärtsdrehbewegung beaufschlagt wird.

2. Sitzeinheit nach Anspruch 1, dadurch gekennzeichnet, daß wenigstens einige der Drehelemente als Rollen oder Räder (7, 9) ausgebildet sind.

3. Sitzeinheit für Kraftfahrzeuge, die auf zwei zueinander parallelen geradlinigen, an dem Boden (F) des Fahrgastraums des Kraftfahrzeugs befestigten Führungen (104) montierbar sind, mit dem Sitzkissenteil (3) zugeordneten vorderen Lagerungsgliedern (107, 108) die eine Translationsbewegung des Sitzes (1) längs der Führungen (104) sowie eine Vorwärtsdrehung des Sitzes (1) selbst um eine senkrecht zu den Führungen (4) verlaufende Achse ermöglichen, und hinteren Lagerungsgliedern (109), die an den Führungen (104) gelagert und von diesen durch die Vorwärtsdrehung des Sitzes (1) abhebbar sind, sowie mit zwischen dem Sitz (1) und den Führungen (104) angeordneten lösbaren Verhakungsmitteln (106, 112) zur Verriegelung des Sitzes (1) in einer selektiv einstellbaren normalen Gebrauchsstellung, die es in gelösten Zustand ermöglichen, den Sitz (1) durch eine kombinierte Translations- und Vorwärtsdrehbewegung in eine abgesenkte Vorderposition zu verbringen, gekennzeichnet durch

jeweils ein Gleitstück (106) für jede der beiden Seiten des Sitzes (1), das gleitbar an den Führungen (104) montiert und an den Führungen (104) selbst in einer wählbaren vorbestimmten Position blockierbar ist, wobei jedes dieser Gleitstücke (106) im Bereich der Vorderkante des Sitzkissenteils (3) einen Bügel (107) mit einem Stiftteil (108) aufweist, der zusammen mit dem Stiftteil (108) des Bügels (107) des jeweils anderen Gleitstücks (106) die Drehachse des Sitzes bestimmt,

lösbare Verriegelungsmittel (112), die zwischen den Gleitstücken (106) und dem Sitzkissenteil (3) wirken und durch die der Sitz durch Änderung der Verriegelungsposition der Gleitstücke (106) auf der Führung (104) in einer selektiv einstellbaren normalen Gebrauchsstellung verriegelbar ist,

jeweils ein längs jeder der beiden Seiten des Sitzkissenteils (3) angeordnetes Formelement (1-03) mit einem langgestreckten profilierten Teil (105), das mit dem Stiftteil (108) des Bügels (107) eines der Gleitstücke (106) zusammenwirken kann,

sowie wenigstens einen Verbindungsschwenkarm (115), der mit einem Ende an der hinteren Kante des Sitzkissenteils (3) und mit seinem entgegengesetzten Ende an einem der Gleitstücke (106) in einer Position angelenkt ist, die in der genannten normalen Gebrauchs-stellung zwischen dem vorderen Lagerungsglie-dern (107, 108) und den hinteren Lagerungsglie-dern (109) des Sitzes (1) liegt, so daß durch Lösen der Verriegelungsmittel (112) möglich ist, daß

das Formelement (103) relativ zu dem Stiftteil (108) ein geführtes Gleiten längs eines durch das profilierte Teil (105) definierten Bahn ausführt,

das Formelement (103) um die von den Stiftteilen (108) definierte gemeinsame Drehachse gedreht wird,

und die hintere Kante des Sitzkissenteils (3) in einer durch den wenigstens einen Verbindungsschwenkarm (115) definierten Kreisbahn geführt wird, wodurch der Sitz (1) mit einer kontrollierten Vorwärtsdrehbewegung beaufschlagt wird.

4. Sitzeinheit nach Anspruch 1 oder 3, dadurch gekennzeichnet, daß zwei Verbindungsschwenkarme (21, 115) vorgesehen sind, die jeweils eine Seite des Sitzkissenteils (3) mit einem der Gleitstücke (11, 106) verbinden.

5. Sitzeinheit nach Anspruch 3, dadurch gekennzeichnet, daß die Formelemente (103) integrale Bestandteile der Struktur des Sitzkissenteils (3) sind.

6. Sitzeinheit nach Anspruch 3 oder 5, dadurch gekennzeichnet, daß jedes der Formelemente (103) einen im wesentlichen geradlinigen Schlitz (105) umfaßt, der das profilierte Teil bildet.

7. Sitzeinheit nach einem der Ansprüche 3, 5 oder 6, dadurch gekennzeichnet, daß den Formelementen (103) im Bereich der hinteren Kante des Sitzkissenteils (3) Stützschenkel (109) zugeordnet sind, die mit den entsprechenden Enden der Gleitstücke (106) zusammenwirken.

8. Sitzeinheit nach Anspruch 7, dadurch gekennzeichnet, daß die Stützschenkel (109) abgeschrägte Kanten (110a) besitzen, die mit den Kanten der Gleitstücke (106) in einer Klemmkonfiguration zusammenwirken und dadurch in der normalen Gebrauchsstellung die Zentrierung des Sitzes relativ zu den Führungen (104) gewährleisten.

**Revendications**

1. Ensemble de siège pour véhicules automobiles, destiné à être monté sur deux guides rectilignes (4) qui sont parallèles entre eux et sont fixés au plancher (F) de l'habitacle du véhicule automobile, dans lequel

au coussin (3) du siège (1) sont associés des éléments supports avant (6, 7) qui permettent un mouvement de translation du siège (1) le long des guides (4) et une rotation vers l'avant du siège (1) lui-même autour d'un axe perpendiculaire aux guides (4), et des éléments supports arrière (8, 9) qui portent sur les guides (4) et peuvent se soulever des guides (4) sous l'effet de ladite rotation du siège (1) vers l'avant, et

des moyens à crochets déverrouillables (11, 17) sont interposés entre le siège (1) et les guides (4) pour permettre le verrouillage du siège (1) dans une position normale d'utilisation sélectivement réglable et, lorsqu'ils sont dégagés, pour permettre d'amener le siège (1) dans une position avancée abaissée, par un mouvement combiné de translation et de rotation vers l'avant du siège, caractérisé en ce que :

lesdits guides (4) possèdent une section sensiblement en U et sont ouverts l'un vers l'autre,

les éléments supports avant (6, 7) et les éléments supports arrière (8, 9) comprennent des éléments rotatifs (7, 9) qui coopèrent respectivement avec le canal du U et avec la surface externe des guides (4),

deux coulisseaux (11), un sur chaque côté du siège (1), sont prévus montés coulissants sur les guides (4) et capables d'être verrouillés sur les guides (4) dans une position sélectivement prédéterminée,

des moyens de verrouillage déverrouillables (17) sont prévus pour agir entre les coulisseaux (16) et le siège (1) pour verrouiller le siège (1) dans une position normale d'utilisation sélectivement réglable, et agissent sur les coulisseaux (11), et

il est prévu au moins un bras de liaison pivotant, articulé au bord arrière du siège (3) et ayant son extrémité opposée articulée sur l'un des coulisseaux (11) dans une région qui, dans ladite position normale d'utilisation, est interposée entre les éléments supports avant (6, 7) et lesdits éléments supports arrière (8, 9) du siège (1) de sorte que, lorsque les éléments de verrouillage (17) sont déverrouillés, le siège (1) peut coulisser sur les guides (4) vers ladite position avancée pendant que ledit bras de liaison (21) guide le bord arrière du coussin (3) selon un trajet circulaire, en imprimant au siège (1) un mouvement maîtrisé de rotation vers l'avant.

2. Ensemble de siège selon la revendication 1, caractérisé en ce qu'au moins certains des éléments rotatifs sont constitués par des galets ou roulettes (7, 9).

3. Ensemble de siège pour véhicules automobiles, destiné à être monté sur deux guides rectilignes (104) qui sont parallèles entre eux et sont fixés au plancher (F) de l'habitacle du véhicule automobile, dans lequel

au coussin (3) du siège (1), sont associés des éléments supports avant (107, 108) qui permettent un mouvement de translation du siège (1) le long des guides (104) et une rotation du siège (1) vers l'avant autour d'un axe perpendiculaire aux guides (104), et des éléments supports arrière (109) qui portent sur les guides (104) et peuvent se soulever des guides (104) sous l'action de ladite rotation du siège (1) vers l'avant, et

des moyens à crochets déverrouillables (106, 112) sont interposés entre le siège (1) et les guides (104) pour permettre le verrouillage du siège (1) dans une position normale d'utilisation sélectivement réglable et, lorsqu'ils sont dégagés, pour permettre au siège (1) de se placer dans une position avancée abaissée, avec un mouvement combiné de translation et de rotation vers l'avant du siège, caractérisé en ce qu'il comprend :

deux coulisseaux (106), un pour chaque côté du siège (1) montés coulissants sur les guides (104) et capables d'être verrouillés sur les guides (104) dans une position sélectivement prédéterminée, chacun des coulisseaux (106) ayant, au droit du bord avant du coussin, une ferrure (107) munie d'une partie doigt (108) qui définit ledit axe de rotation du siège avec la partie doigt (108) de la ferrure (107) de l'autre coulisseau (106),

des moyens de verrouillage déverrouillables (112) qui agissent entre les coulisseaux (106) et le coussin (3) pour verrouiller le siège dans une position normale d'utilisation sélectivement réglable, par modification de la position de verrouillage des coulisseaux (106) sur lesdits guides (104), et

deux éléments en forme (103) dont chacun est logé le long d'un côté respectif du coussin (3) du siège (1) et présente une partie profilée allongée (105) qui peut coopérer avec la partie doigt (108) de la ferrure (107) de l'un des coulisseaux (106), et

au moins un bras de liaison pivotant (115) ayant une extrémité articulée au bord arrière du coussin (3) et son extrémité opposée articulée sur l'un des coulisseaux (106), dans une région qui, dans ladite position normale d'utilisation, est interposé entre les éléments supports avant (107, 108) et lesdits éléments supports arrière (109) du siège (1), de sorte que, après déverrouillage des moyens de verrouillage (112), on peut obtenir :

le coulissement guidé de l'élément en forme (103) par rapport à la partie doigt (108) le long d'un trajet défini par la partie profilée (105),

la rotation de l'élément en forme (103) autour de l'axe commun de rotation défini par lesdites parties doigts (108), et

le guidage du bord arrière du coussin (3) selon un trajet circulaire défini par ledit au moins un bras de liaison pivotant (115), de sorte qu'un mouvement maîtrisé de rotation vers l'avant est imprimé au siège (1).

4. Ensemble de siège selon la revendication 1 ou la revendication 3, caractérisé en ce qu'il comprend deux bras pivotants (21, 115) dont chacun relie un côté du coussin (3) à l'un des coulisseaux (11, 106).

5. Ensemble de siège selon la revendication 3, caractérisé en ce que les éléments en forme (103) sont des parties intégrantes de la structure du coussin (3) du siège.

6. Ensemble de siège selon la revendication 3 ou la revendication 5, caractérisé en ce que chacun des éléments en forme (103) présente une fente (105) sensiblement rectiligne qui définit ladite partie profilée.

7. Ensemble de siège selon l'une quelconque des revendications 3, 5 et 6, caractérisé en ce que les branches supports (109) sont associées aux éléments en forme (103) au droit du bord arrière du coussin (3), les branches étant capables de coopérer avec les extrémités correspondantes desdits coulisseaux (106).

8. Ensemble de siège selon la revendication 7, caractérisé en ce que les branches supports (109) présentent des bords obliques (110a) pour coopérer avec les bords des coulisseaux (106) dans une configuration générale de coin pour assurer le centrage du siège par rapport aux guides (104) dans la position normale d'utilisation.

# FIG. 1

# FIG. 2

# FIG. 3

# FIG. 4

FIG. 5

FIG. 6

0 120 817

# FIG. 7